# EUROPEAN PATENT APPLICATION

(11) **EP 0 624 961 A1**
(43) Date of publication of application: **17.11.1994**
(21) Application number: 94850054.1
(22) Date of filing: 14.04.1994
(51) Int. Cl.: H04B 7/26, H04Q 7/04

(54) **Method for planning cordless telephone systems**

(30) Priority: 14.05.1993 SE 9301658
(71) Applicant: TELIA AB, S-126 86 Farsta (SE)
(72) Inventor: Wickman, Johan, S-237 00 Malmö (SE); Blomstergren, Sten, NL-1066 JB Amsterdam (NL)

(57) **Abstract**

The invention relates to a method for dimensioning cordless telephony systems, in which a number of calculation parameters such as geographic division of the coverage area into rectangles, the relationship of the rectangles to any neighbours, determination of types of environment such as, for example, offices, store rooms, industrial premises, etc., and coverage area for a base unit, is extracted. These parameters are then used in an algorithm which enables a computer-supported capacity analysis with respect to the number of base units in the system to be carried out.

## Description

### FIELD OF THE INVENTION

The present invention relates to a method for dimensioning cordless telephony systems. The invention essentially consists of collecting and processing data in order to determine the required number of base units when planning new cordless telephony systems in primarily indoor environments or corresponding environments. The data calculation allows a layman, by following the method, to calculate the optimum number of base units for the relevant telephony installation. The invention consists partly of the structuring which is carried out for describing the installation and partly of the algorithms which are used for calculating the number of base units needed.

### PRIOR ART

Methods for cell planning and calculating a grade of service in communication systems are already known, for example from the following documents:

"Cochannel Interference Considerations in Frequency Reuse Small-Coverage-Area Radio Systems", IEEE Transactions on Communications, vol. COM-30; No. 1, January 1982, pages 135-42 compares radio systems which respectively utilize hexagonal or square coverage areas. The document deals, inter alia, with the signal/interference ratio, and algorithms are set up for calculating S/I for the two systems. The document also discusses other characteristics of the two systems such as, for example, "service probability".

"Cell Planning in Manhattan Environments", Vehicular Technology Society 42nd VTS Conference, IEEE New York, USA, vol. 1, pages 435-8 relates to cell planning in an environment consisting of buildings which are called "Manhattan model" in the document. This model is based on the assumption that the radio environment consists of square houses which are placed in straight rows. It is pointed out in the document that in such an environment it is possible to reuse accessible channels in a more effective way than with the normal cell structure.

"Propagation Models", IEE Transactions on Vehicular Technology, vol. 37, No. 1, February 1988, pages 20-5, shows a compilation of some common radio propagation models which can be used in a radio system.

"Products and services for cell planning" Ericsson Review, No. 2, 1990, pages 84-91 describes a cell planning system which is provided by Ericsson Radio System. The document describes a computer-based system and the input parameters required by any given user.

American Patent No. 4 771 448 relates to a cellular mobile telephone system which can be installed without requiring to plan the placement of the base units. Since the base units are intelligent, they can be placed virtually anywhere for carrying out a dynamic allocation of resources.

None of these documents, however, describes a method for estimating the number of base units in a cordless telephony system. Thus, to calculate the cost of a radio installation of this type, the necessary number of base units must be known. This number can be either estimated by a competent and experienced person by, for example, studying a blueprint and visiting the installation or by taking measurements in those locations for which the radio system is intended by means of representative radio equipment. Both these methods require experienced and competent personnel and the latter also considerable time consumption. However, the invention solves the above calculation problems without carrying out radio measurements or requiring special radio knowledge on the part of those who are using the invention.

### SUMMARY OF THE INVENTION

The present invention thus provides a method for dimensioning cordless telephony systems which solves the above problems. According to the invention, a number of calculation parameters are extracted, such as geographic division of the coverage area into rectangles, the relationship of the rectangles to any neighbours, determination of types of environment such as, for example, offices, store rooms and industrial premises, and coverage areas for a base unit. These parameters are then used in an algorithm which enables a computer-supported capacity analysis relating to the number of base units in the system to be carried out.

Embodiments of the invention are specified in greater detail in the subsequent patent claims.

### SHORT DESCRIPTION OF THE DRAWINGS

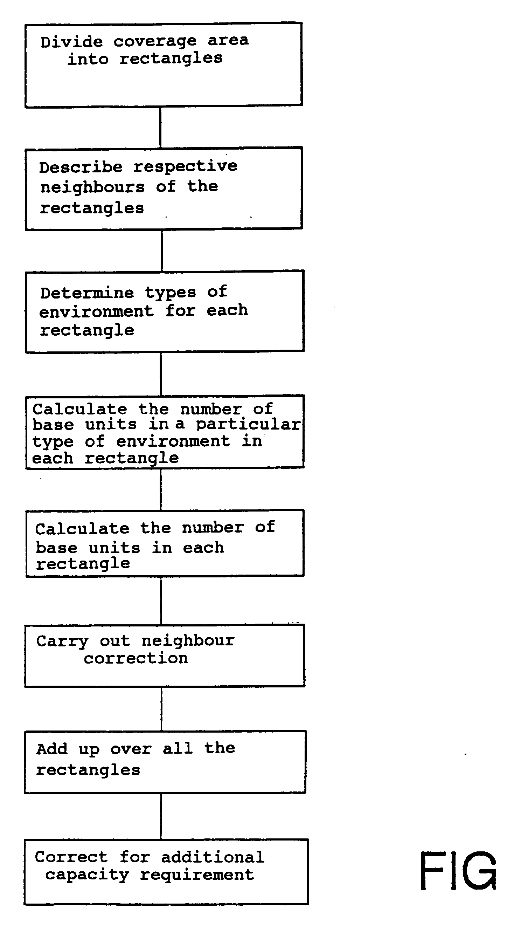

The invention will now be described in detail with reference to the attached drawings, in which the only figure is a flowchart of the method according to the invention.

### DETAILED DESCRIPTION OF THE EMBODIMENTS OF THE INVENTION

The present invention is intended to be applied in dimensioning cordless telephony systems. Such systems comprise fixed base units which maintain radio contact with mobile or stationary sets. The invention provides an aid for planning the setting up of the system by determining the optimum number of base units which are required for covering the whole area of interest and also meeting the capacity required for handling the traffic. The invention presupposes that knowledge is available of the geographic configuration of the area of interest, that is to say normally a blueprint of the building in question. The invention also presupposes that system-related parameters have been stored in a database.

Referring to the figure, the first measure according to the method of the invention is to divide the coverage area into rectangles the joint area of which corresponds to the coverage area. The rectangles are defined by scalar specification of the two side dimensions. It is thus not necessary to specify a reference to coordinates. The coverage area can be divided into as few rectangles as possible but must at least be delimited by outside walls and metal fire walls. The boundaries do not need to be specified with a higher resolution than 5 m. Thus, each rectangle is associated with two numbers.

The next step is to describe the neighbours of the rectangles. For each rectangle, the number of the rectangle with the greatest common sectional length is specified. Furthermore, any rectangles which wholly or partially overlap on the next level overhead should be specified for each rectangle. Note that rectangles which are separated by metal fire walls should not be specified as neighbouring.

A rectangle can contain several different types of environment. The proportion of different types of environment must be determined in order to be able to calculate the number of base units. It is consequently specified for each rectangle how large a relative proportion is constituted by each respective type of environment. According to the invention, it is appropriate to have at least seven types of environment namely the following:
a. structurally light offices (open office landscape or light-weight inner walls of plaster, glass etc.)
b. structurally heavy offices (inner walls of stone, brick and concrete, inter alia)
c. open indoor area with ceiling height lower than 4 m
d. open indoor area with ceiling height higher than 4 m
e. store rooms/industrial premises with racks or machines higher than 75% of the ceiling height
f. store rooms/industrial premises with racks or machines lower than 75% of the ceiling height
g. outdoor area.

Then the number of base units in a certain type of environment within a rectangle is calculated. To be able to do this, the coverage area of the base unit for the types of environment in question must also be known. This base area is calculated by determining the range with the required quality for the radio system and type of environment in question. The base area is converted to the area of a square having a diagonal which is twice as long as the range for the type of environment in question. The number of base units in a particular environment within a rectangle is calculated as the quotient between the area of the type of environment within the rectangle and the base area.

The number of base units in a particular rectangle can then be calculated by adding together, without rounding-off, the number of bases over all types of environment for the rectangle.

This is suitably followed by correcting the number of base units per rectangle in dependence on the conditions in a neighbouring rectangle and any overlapping rectangle. The correction is carried in order to optimize the number of base units. By using the same base unit in neighbouring and overhead rectangles, the number of base units can be kept as small as possible. This is described in greater detail below.

The number of base units is then added together over all the rectangles. This number of base units provides complete coverage of the required area.

However, the above base number does not guarantee that additional base units will not be needed for traffic capacity reasons. A calculation is therefore carried out on the basis of maximum expected traffic in an office environment and an open environment. The traffic estimate is compared with the traffic which can be maximally handled by the number of base units which is determined by adding together the number of bases over the rectangles for an open enviroment or offices for those rectangles which are stated to form the critical areas. An increase in the number of bases is made in those rectangles in which there is need.

Neighbour correction is carried out as follows. If the rectangle overlaps a rectangle on the closest level below, the base number of the rectangle should be reduced by the following product:

The level penetration factor multiplied by the number of bases for the overlapped rectangle multiplied by the ratio between the overlapping area and the total area of the overlapping rectangle. The base number can thereby be 0 as the lowest permitted value.

If a rectangle has a neighbouring rectangle and its base number is less than 1, the latter should be rounded off to 1 if the quotient between the sectional length and mean side length of the rectangle is less than a neighbourhood criterion. This neighbourhood criterion thus expresses the maximum quotient for which correction must be carried out. The neighbourhood criterion is system-dependent and is stored in a system file as described below.

For rectangles which wholly lack neighbours, the base number should be rounded off upwards to the nearest whole number.

As stated above, system-dependent parameters which are utilized by a calculation program should be stored in advance, suitably in a system file. In this manner, the programme can be used for different systems without the user needing any system knowledge. The following parameters are included in the system file: the neighbourhood criterion, level penetration factor, range of the base unit for different types of environment, and maximum traffic per base unit for a particular type of environment.

The present invention thus provides a novel method for dimensioning cordless telephony systems. A structured description and division of the coverage area according to the invention has not previously been known. The invention provides calculation methods for taking into account irregular building structures without needing to specify the planning of the building, which is a great advantage. The accuracy of the estimate is better than ± 15% according to an evaluation of the invention which has been carried out with environments where the number of base units per unit of area varies up to a factor of 10.

The scope of the invention is only limited by the patent claims below.

## Claims

1. Method for dimensioning cordless telephony systems in an area with known structure with respect to geographic division and radio environment, characterized by the steps:
that the area is divided into rectangles;
that each rectangle is described by specifying the proportion of a respective type of environment;
that the number of base units per rectangle is calculated with the aid of the description of each rectangle with regard to the type of environment and with knowledge of the range of each base unit within the respective type of environment;
that the number of base units per rectangle is added together over all the rectangles; and
that the number of base units per rectangle is analysed with regard to the traffic demand.

2. Method according to Claim 1, characterized in that
for each rectangle, the rectangle which has the greatest common sectional length and any overhead rectangles are specified; and
that the number of base units per rectangle is corrected in dependence on any rectangles which are underneath and neighbouring.

3. Method according to Claim 2, characterized in that each rectangle is defined by scalar specification of the two side dimensions and by specification of the greatest common sectional length for each neighbouring rectangle.

4. Method according to Claim 2, characterized in that the number of base units per rectangle which overlaps a rectangle on the nearest level underneath is reduced by the product of level penetration factor times the number of base units for the overlapped rectangle times the ratio between the overlapping area and the total area of the overlapping rectangle.

5. Method according to Claim 3, characterized in that the number of base units per rectangle which has a neighbouring rectangle, if this number is less than 1 and if the quotient between the sectional length and the mean side length of the rectangle is less than a neighbour criterion, is rounded off to 1.

6. Method according to Claim 2, characterized in that the number of base units per rectangle which lacks neighbours is to be rounded off upwards to a whole number.

7. Method according to any of the preceding claims, characterized in that the number of types of environment is seven, with the following classification:
a. structually light office
b. structurally heavy office
c. open indoor area with ceiling height lower than 4 m
d. open indoor area with ceiling height higher than 4 m
e. store room/industrial premises with racks or machines higher than 75% of the ceiling height
f. store room/industrial premises with racks or machines lower than 75% of the ceiling height
g. outdoor area.

8. Method according to any of the preceding claims, characterized in that system-dependent parameters are stored in advance.

9. Method according to Claim 8, characterized in that the following system-dependent parameters are included:
neighbour criterion, level penetration factor, ranges of the base unit in different types of environment, maximum traffic per base unit in different types of environment.
